# EUROPEAN PATENT APPLICATION

(11) **EP 4 223 382 A1**
(43) Date of publication of application: **09.08.2023**
(21) Application number: 21875047.9
(22) Date of filing: 01.09.2021
(51) Int. Cl.: B01D 21/01, C02F 1/56

(54) **ORGANIC COAGULANT AND METHOD FOR PRODUCING SAME, AND WATER-CLEANING AGENT AND METHOD FOR PRODUCING SAME**

(30) Priority: 01.10.2020 JP 2020167207; 15.07.2021 JP 2021116847
(71) Applicant: Dexerials Corporation, Shimotsuke-shi, Tochigi 323-0194 (JP)
(72) Inventor: UMATSU, Koki, Shimotsuke-shi, Tochigi 323-0194 (JP); OBATA, Kei, Shimotsuke-shi, Tochigi 323-0194 (JP); HIROSHIBA, Yasuhiro, Shimotsuke-shi, Tochigi 323-0194 (JP); ITO, Masahiko, Shimotsuke-shi, Tochigi 323-0194 (JP); WAKU, Kaori, Shimotsuke-shi, Tochigi 323-0194 (JP)
(74) Representative: Mewburn Ellis LLP
(86) International application number: PCT/JP2021/032119
(87) International publication number: WO 2022/070745

(57) **Abstract**

Provided are an organic coagulant which includes plant extract, a water-purifying agent which includes the organic coagulant and a polymeric flocculant, and the like.

## Description

### Technical Field

The present invention relates to an organic coagulant and a method of producing the organic coagulant, and a water-purifying agent (or a water-cleaning agent) and a method of producing the water-purifying agent.

### Background Art

In recent years, a large volume of wastewater that contains environmentally harmful substances, such as inorganic ions (e.g., metal ions and fluorine ions) is generated during production processes of various products in factories and the like. A water purification process is carried out to process the wastewater using a water-purifying agent.

As a water-purifying agent utilizing a charge neutralizing function plants have, a water-purifying agent composed of a granulated product including a plant powder and a polymeric flocculant has been proposed (see, for example, PTL 1). The proposed technology is a very beneficial technology that can be suitably used for automatic purification devices for wastewater.

### Citation List

### Patent Literature

PTL 1: Japanese Patent Application Laid-Open (JP-A) No. 2016-187782

### Summary of Invention

### Technical Problem

As described above, the technology disclosed in PTL 1 is a very beneficial technology. On the other hand, as plants include components insoluble to water, a viscosity of the water-purifying agent in the dissolved state needs to be adjusted to a relatively high level to prevent sedimentation of the water-insoluble component when a plant is used as a coagulant. Therefore, only a material having a high viscosity may be used, or a range of product properties, such as a blending ratio between constitutional components of a water-purifying agent, may be restricted. When a viscosity is not adequate (i.e., a viscosity is low), moreover, there is a possibility that a pipe or the like is clogged with the water-insoluble component. Accordingly, there is a strong demand for prompt development of a water-purifying agent including a minimum amount of a water-insoluble component.

The present invention aims at solving the above-described various problems in the related art and achieving the following object. Namely, an object of the present invention is to provide a water-purifying agent including a minimum amount of a water-insoluble component and achieving excellent water purification performance and a method of producing the water-purifying agent, and an organic coagulant suitably used for the water-purifying agent and a method of producing the organic coagulant.

### Solution to Problem

As a result of the research diligently conducted by the present inventors, the present inventors have found that excellent water purification performance is achieved by adding plant extract to a water-purifying agent, while removing a water-insoluble component included in the plant. In addition, the present inventors have found that, as substances that may be sedimented when the water-purifying agent is dissolved can be removed, a material having a low viscosity can be used, and a degree of freedom for designing a water-purifying agent, such as a viscosity and a blending ratio, can be significantly increased.

Means for solving the above-described problems are as follows.
<1> An organic coagulant including plant extract.
<2> The organic coagulant according to <1>,
   wherein electrical conductivity of the organic coagulant with a solid content of the organic coagulant being 0.1% by mass is from 12 mS/m to 350 mS/m.
<3> The organic coagulant according to <1> or <2>,
   wherein zeta potential of the organic coagulant is anionic.
<4> The organic coagulant according to any one of <1> to <3>, wherein the plant extract includes water-soluble natural lignocellulose.
<5> The organic coagulant according to any one of <1> to <4>, wherein a plant from which the plant extract is extracted is at least one selected from the group consisting of straws, reeds, and hemp.
<6> A method of producing an organic coagulant, the method including:
   a pulverization step including pulverizing of a plant;
   an extraction step including mixing of the pulverized plant and water to yield plant extract; and
   a filtration step including filtering of the plant extract to yield a liquid component,
   wherein the organic coagulant is the organic coagulant according to any one of <1> to <5>.
<7> The method according to <6>,
   wherein the extraction step is carried out with at ambient temperature, with heat, or with heat and pressure.
<8> A water-purifying agent including:
   the organic coagulant according to any one of <1> to <5>; and
   a polymeric flocculant.
<9> The water-purifying agent according to <8>,
   wherein the water-purifying agent is in a form of particles.
<10> The water-purifying agent according to <8> or <9>,
   wherein a mass ratio (organic coagulant/polymeric flocculant) of the organic coagulant to the polymeric flocculant is from 0.01/99.99 to 99.99/0.01.
<11> The water-purifying agent according to any one of <8> to <10>,
   wherein an amount of a water-insoluble component in the water-purifying agent is 5% by mass or less.
<12> A method of producing a water-purifying agent, the method including:
   a kneading step including kneading of a polymeric flocculant and the organic coagulant according to any one of <1> to <5> to obtain a kneaded product;
   a drying step including drying of the kneaded product to obtain a dried product;
   a pulverization step including pulverizing of the dried product to obtain a pulverized product; and
   a classification step including classifying of the pulverized product to obtain a water-purifying agent,
   wherein the water-purifying agent includes the organic coagulant according to any one of <1> to <5>, and the polymeric flocculant.

### Advantageous Effects of Invention

The present invention can solve the above-described various problems in the related art, achieve the above-described object, and provide a water-purifying agent achieving excellent water purification performance and a method of producing the water-purifying agent (or a water-purifying agent production method), and an organic coagulant suitably used for the water-purifying agent and a method of producing the organic coagulant (or an organic coagulant production method).

### Brief Description of Drawings

[Fig. 1] Fig. 1 is a graph depicting results from the measurement of turbidity in Test Examples 1 to 5.
[Fig. 2] Fig. 2 depicts photographs capturing the states when the turbidity was measured in Test Examples 1 to 5.

### Description of Embodiments

### (Organic coagulant)

The organic coagulant of the present invention includes at least plant extract, and may further include other components as necessary.

### <Plant extract>

A plant from which the plant extract is extracted is not particularly limited, and may be appropriately selected according to the intended purpose. As the plant, one plant may be used alone, or two or more plants may be used in combination.

Among the plants, at least one selected from the group consisting of straws, reeds, and hemp is preferred.

The hemp is not particularly limited, and may be appropriately selected according to the intended purpose. The hemp is preferably jute mallow (*Corchrus olitorius*)*.*

As the jute mallow, jute mallow grown in Changsha City, China, or alternatively, "Zhonghuangse No. 4" with the identification number of nationally identified hemp 2013, "Zhonghuangse No. 3" with the identification number of the product identification registration number 1209006, "Zhonghuangse No. 1" with the identification number of XPD005-2005, or "Zhonghongma (*Apocynum Venetum* L.)" with the identification number of the product identification registration number 1209001, certified by Institute of Bast Fiber Crops, Chinese Academy of Agricultural Sciences, or the like is preferably used. Among the above-listed examples, the "Zhonghuangse No. 4," "Zhonghuangse No. 3," and "Zhonghongma" are preferred, and the "Zhonghuangse No. 4" is particularly preferred.

The "Zhonghuangse No. 4" has the following characteristics.
Agricultural product type: Jute
Origin of variety: Crossed between Xianghuangma No. 3×0-4(l) hybrid F1 generation and Xianghuangma No. 3
Characteristics and properties: Zhonghuangse No. 4 is a typical jute of a long fruit variety, which has a green stem that has a cylindrical shape, has needle-shaped leaves dispersed, green leaf stalks where each stalk forms a small angle with a main stem, and has lateral buds, stipules, green calyces, and a fruit that is a long cylindrical shape having a 5 locules with seeds of a late-ripening variety.

The plant extract preferably includes water-soluble natural lignocellulose.

### -Water-soluble natural lignocellulose-

The water-soluble natural lignocellulose (may be referred to as "lignocellulose" hereinafter) is composed of cellulose, hemicellulose, and lignin. The lignin is a main component constituting a plant cell wall together with polysaccharides (cellulose and hemicellulose).

An amount of the lignocellulose in the plant extract is not particularly limited, and may be appropriately selected according to the intended purpose.

A method of preparing the plant extract is not particularly limited, and may be appropriately selected from plant extract preparation methods known in the related art. The plant extract is preferably prepared by the below-described extraction step in the organic coagulant production method of the present invention.

An amount of the plant extract in the organic coagulant is not particularly limited, and may be appropriately selected according to the intended purpose.

### <Other components>

Other components that may be included in the organic coagulant are not particularly limited, provided that the above-mentioned other components do not adversely affect effects obtainable by the present invention. The above-mentioned other components may be appropriately selected according to the intended purpose.

Amounts of the above-mentioned other components in the organic coagulant are not particularly limited, and may be appropriately selected according to the intended purpose.

A form of the organic coagulant is not particularly limited, and may be appropriately selected according to the intended purpose. The organic coagulant may be a liquid or solids. The organic coagulant can be produced as a liquid component as described below. However, the liquid component may be solidified, which is then dissolved in water to be used as the organic coagulant.

### <Viscosity>

A viscosity of the organic coagulant is not particularly limited, and may be appropriately selected according to the intended purpose. The viscosity of the organic coagulant in the state of an aqueous solution having a solid content of 0.1% by mass is, for example, from 0.5 mPa·s to 5 mPa·s.

The viscosity can be measured at 23°C by a TVC-10 type viscometer (B-type viscometer) available from Toki Sangyo Co., Ltd., using a rotor No. 0.

### <Electrical conductivity>

Electrical conductivity of the organic coagulant is not particularly limited, and may be appropriately selected according to the intended purpose. The electrical conductivity of the organic coagulant in the state of an aqueous solution having a solid content of 0.1% by mass is preferably from 12 mS/m to 350 mS/m, more preferably from 50 mS/m to 350 mS/m.

The electrical conductivity can be measured at the liquid temperature of 22°C by F-70, a benchtop electrical conductivity meter (available from HORIBA, Ltd.).

### <Zeta potential>

Zeta potential of the organic coagulant is not particularly limited, and may be appropriately selected according to the intended purpose. The zeta potential is preferably anionic.

Moreover, the Δ zeta potential of the organic coagulant as measured and calculated in the following manner is preferably 40 mV or greater, more preferably 45 mV, and particularly preferably 50 mV or greater.

### [Measurement]

A potassium fluoride aqueous solution where a concentration of potassium fluoride is adjusted to 500 ppm is collected in a beaker by 600 mL. While sufficiently stirring the potassium fluoride aqueous solution, 3.5 mL of a 35% by mass calcium fluoride aqueous solution is added.

While sufficiently stirring the resulting mixed solution, 5% by mass sulfuric acid is added to adjust the pH to be within the range of 4.5 ± 0.25.

The liquid mixture having the pH adjusted in the above-described manner is subjected to a measurement of zeta potential (may be referred to as "CaF₂ zeta potential" hereinafter).

Moreover, 100 mL of the liquid mixture having the pH adjusted in the above-described manner is collected. While stirring the collected liquid mixture at 500 rpm, the organic coagulant is added so that a concentration of the organic coagulant becomes 1% by mass. After finishing the stirring, the supernatant fluid is sampled, followed by measuring of zeta potential of the supernatant fluid (may be referred as "zeta potential after adding the organic coagulant" hereinafter).

A difference between the zeta potential (A) of CaF₂ and the zeta potential (B) after adding the organic coagulant is calculated as Δ zeta potential.

The zeta potential can be measured by a dynamic light scattering analysis.

The organic coagulant may be suitably produced in accordance with the organic coagulant production method of the present invention as described below.

Since the organic coagulant has excellent coagulation power as described in the section of Examples below, the organic coagulant can be used for a water purification process together with a polymeric flocculant. Moreover, the water purification process can be performed without using an inorganic flocculant, such as an aluminum-based inorganic flocculant, an iron-based inorganic flocculant, and slaked lime. The organic coagulant is also suitably used for the water-purifying agent of the present invention, which will be described below.

### (Method of producing organic coagulant)

The method of producing an organic coagulant (or the organic coagulant production method) of the present invention is a production method for the above-described organic coagulant of the present invention. The method includes at least a pulverization step, an extraction step, and a filtration step, and may further include other steps as necessary.

### <Pulverization step>

The pulverization step is a step including pulverizing of a plant.

A part of the plant (may be referred to as a "raw material for extraction" hereinafter) is not particularly limited, and may be appropriately selected according to the intended purpose. Examples of the part of the plant include leaves, stems, skins or husks, and the like. The above-listed examples may be used alone or in combination.

The raw material for extraction may be a dried product or an undried product, but the raw material is preferably a dried product.

A method of pulverizing the plant is not particularly limited, and may be appropriately selected from methods known in the related art.

A degree of pulverization is not particularly limited, and may be appropriately selected according to the intended purpose.

### <Extraction step>

The extraction step is a step including mixing of the pulverized plant and water to yield plant extract.

The number of times the extraction step is carried out may be once, or twice or more.

The extraction step is not limited as long as extraction with water as an extraction solvent is carried out at least once, and may be combined with extraction with an organic solvent such as ethyl acetate. However, the extraction step preferably includes only extraction with water.

A type of the water is not particularly limited, and may be appropriately selected according to the intended purpose. Examples of the water include pure water and the like.

In the extraction step, the pulverized plant may be added to an extraction solvent, or an extraction solvent may be added to the pulverized plant. In the extraction step, moreover, stirring may be performed as necessary.

At the time of the extraction, a concentration of the raw material for extraction is not particularly limited, and may be appropriately selected according to the intended purpose. For example, the concentration of the raw material is from 1% by mass to 10% by mass.

A temperature and pressure for the extraction are not particularly limited, and may be appropriately selected according to the intended purpose. Examples of the temperature and pressure include ambient temperature, heat, and heat and pressure.

The ambient temperature is preferably from approximately 20°C to approximately 28°C.

The heat is a temperature higher than the ambient temperature.

The heat and pressure are a combination of heat that is a temperature higher than the ambient temperature and a pressure that is higher than the atmospheric pressure, which is, for example, approximately 2 atm.

Duration of the extraction is not particularly limited, and may be appropriately selected according to the intended purpose. For example, the duration of the extraction is from 10 minutes to 24 hours.

A method of confirming the presence of lignocellulose in the plant extract is not particularly limited, and may be appropriately selected from methods known in the related art. For example, the presence of lignocellulose can be confirmed from a decomposition product detected by pyrolysis-GC/MS.

### <Filtration step>

The filtration step is a step including filtering of the plant extract to yield a liquid component (may be referred to as a "filtrate" hereinafter).

As the filtration is performed, the plant extract free from a water-insoluble component is obtained.

A method of the filtration is not particularly limited, and may be appropriately selected from methods known in the related art.

A solid content of the liquid component is not particularly limited, and may be appropriately selected according to the intended purpose. For example, the solid content is from 0.05% by mass to 2% by mass.

A measuring method for the solid content is not particularly limited, and may be appropriately selected according to the intended purpose. For example, the solid content can be determined by drying the filtrate, and calculating from an amount of the obtained solids.

### <Other steps>

The above-mentioned other steps are not particularly limited, provided that the above-mentioned other steps do not adversely affect effects obtainable by the present invention. The above-mentioned other steps may be appropriately selected according to the intended purpose.

### (Water-purifying agent)

The water-purifying agent of the present invention includes at least the organic coagulant of the present invention and a polymeric flocculant. The water-purifying agent may further include other components as necessary.

### <Organic coagulant>

As the organic coagulant, the above-described organic coagulant of the present invention is used.

An amount of the organic coagulant in the water-purifying agent is not particularly limited, and may be appropriately selected according to the intended purpose. An amount of the plant extract in the water-purifying agent can be adjusted by adjusting the amount of the organic coagulant.

### <Polymeric flocculant>

The polymeric flocculant is not particularly limited, provided that the polymeric flocculant is capable of removing inorganic contaminants in wastewater. The polymeric flocculant may be appropriately selected according to the intended purpose. Examples of the polymeric flocculant include acrylamide-containing polymers (may be referred merely as "polyacrylamide" or "PAM"), polyamine, sodium alginate, sodium polyacrylate, sodium carboxymethyl cellulose (CMC), and the like. Among the above-listed examples, acrylamide-containing polymers, polyacrylamide, and sodium polyacrylate are preferred.

The polymeric flocculant may have an ionic structure. In a case where ions are cations, examples of the polymeric flocculant include ammonium salts, sulfonium salts, and the like. In a case where ions are anions, examples of the polymeric flocculant include carboxylic acid salts, and the like.

As the polymeric flocculant, a single polymeric flocculant may be used alone, or two or more polymeric flocculants may be used in combination.

An amount of the polymeric flocculant in the water-purifying agent is not particularly limited, and may be appropriately selected according to the intended purpose.

As the polyacrylamide, a commercial product may be used. Examples of the commercial product include: Flopam AN 905, Flopam AN 926, and Flopam AN 956 (all available from SNF CO., LTD.); ACCOFLOC A-100 and ACCOFLOC A-150 (both available from MT AquaPolymer, Inc.); and the like.

As the sodium polyacrylate, a commercial product may be used. Examples of the commercial product include ACCOFLOC A-190 (available from MT AquaPolymer, Inc.), PA-331 (available from Kurita Water Industries Ltd.), and the like.

A mass ratio (organic coagulant/polymeric flocculant) of the organic coagulant to the polymeric flocculant is not particularly limited, and may be appropriately selected according to the intended purpose. The mass ratio (organic coagulant/polymeric flocculant) is preferably from 0.01/99.99 to 99.99/0.01. When the mass ratio is within the above-mentioned preferred range, excellent water purification performance is achieved as well as a sufficient effect of adsorbing microflocs. In the present invention, the mass ratio of the organic coagulant to the polymeric flocculant is a value calculated from a dry mass of the organic coagulant and a dry mass of the polymeric flocculant.

### <Other components>

Other components that may be included in the water-purifying agent are not particularly limited, provided that the above-mentioned other components do not adversely affect effects obtainable by the present invention. The above-mentioned other components may be appropriately selected according to the intended purpose. Examples of the above-mentioned other components include additives, such as preservatives, fillers, thickeners, colorants, thixotropic agents, and the like. The above-listed examples may be used alone or in combination.

Amounts of the above-listed other components in the water-purifying agent are not particularly limited, and may be appropriately selected according to the intended purpose.

A form of the water-purifying agent is not particularly limited, and may be appropriately selected according to the intended purpose. The water-purifying agent is preferably in the form of particles (may be referred to as "granules" or "a granulated product" hereinafter).

An amount of a water-insoluble component in the water-purifying agent is not particularly limited, and may be appropriately selected according to the intended purpose. The amount of the water-insoluble component is preferably 5% by mass or less, and the water-purifying agent is more preferably free from the water-insoluble component.

The water-insoluble component is a component that does not dissolve in pure water of 25°C with stirring at 500 rpm for 30 minutes.

A method of calculating the amount of the water-insoluble component is not particularly limited, and may be appropriately selected according to the intended purpose. For example, a solution is subjected to centrifugation for 5 minutes with centrifugal force of 2,500 G; a supernatant fluid as separated is removed; a weight of a dried product of the residues as obtained from centrifugation is measured; and an amount of a water-insoluble component in the water-purifying agent is calculated from the measured weight.

A method of producing the water-purifying agent is not particularly limited, and may be appropriately selected according to the intended purpose. The water-purifying agent is preferably produced according to the water-purifying agent production method of the present invention, which will be described below.

The water-purifying agent has excellent water purification power as described in the section of Examples below, while reducing an amount of a water-insoluble component derived from the plant. Accordingly, the water-purifying agent can be prepared as a material of low viscosity, which significantly increases a degree of freedom for designing the water-purifying agent, such as a viscosity and a blending ratio of constituent components.

### (Method of producing water-purifying agent)

The method of producing a water-purifying agent (or the water-purifying agent production method) of the present invention is a production method for a water-purifying agent including the organic coagulant of the present invention and a polymeric flocculant. The method includes at least a kneading step, a drying step, a pulverization step, and a classification step, and may further include other steps, such as a forming step, as necessary.

### <Kneading step>

The kneading step is a step including kneading of the polymeric flocculant and the organic coagulant of the present invention to obtain a kneaded product.

A method of the kneading is not particularly limited, and may be appropriately selected according to the intended purpose. Examples of the method include a method including adding of the organic coagulant, which is in a liquid state, to the polymeric flocculant and kneading of the resulting mixture, and the like. In the kneading step, water may be added as necessary.

The kneading may be performed by a mixer (e.g., vertical mixers, such as planetary mixers) with the rotational speed and the duration each set to a predetermined range.

The rotational speed and duration for the kneading with the mixer may be appropriately set taking conditions, such as a blending ratio between the organic coagulant and the polymeric flocculant, into consideration. For example, the rotational speed is preferably from 20 rpm to 150 rpm, and the duration is preferably from 5 minutes to 25 minutes.

### <Drying step>

The drying step is a step including drying of the kneaded product to obtain a dried product.

A forming step (may be also referred to as a "stretching/sheet-forming step") may be provided between the kneading step and the drying step. The forming step includes forming of the kneaded product into a shape of a sheet to obtain a formed product.

In the forming step, the obtained kneaded product may be stretched to a thickness of from 2 mm to 30 mm, preferably approximately 10 mm, by stretching the kneaded product with a roller (rolling) to form into a sheet.

In the drying step, the kneaded product or formed product may be dried for 2 hours to 12 hours at a temperature ranging from 80°C to 150°C by a multi-layer hot air drier.

### <Pulverization step>

The pulverization step is a step including pulverizing of the dried product to obtain a pulverized product.

In the pulverization step, the dried product may be pulverized, for example, by a pneumatic ultrafine pulverizer, until a median diameter of the pulverized product reaches the range of 150 um to 900 µm.

### <Classification step>

The classification step is a step including classifying of the pulverized product to obtain a water-purifying agent.

In the classification step, the pulverized powder is classified into a granulated product having a certain range of particle diameters by a classifier, such as a vibratory sieve shaker and a cartridge-type sieve, so that a median diameter of the granulated product falls within the range of 150 um to 900 µm.

### <Other steps>

The above-mentioned other steps are not particularly limited, provided that the above-mentioned other steps do not adversely affect effects obtainable by the present invention. The above-mentioned other steps may be appropriately selected according to the intended purpose. Examples of the above-mentioned other steps include the above-described forming step.

In accordance with the production method as described above, the water-purifying agent, which is in the form of granules, may be produced.

### (Water purification method)

The present invention also relates to a water purification method using the water-purifying agent of the present invention.

The water purification method includes dissolving the water-purifying agent in water to prepare a dispersion liquid including the organic coagulant and the polymeric flocculant, and providing the dispersion liquid to wastewater to remove inorganic contaminants from the wastewater.

Examples of the inorganic contaminants include nickel, fluorine, iron, copper, zinc, chromium, arsenic, cadmium, tin, and lead. As the inorganic contaminants, a single inorganic contaminant may be included alone in the wastewater, or two or more inorganic contaminants may be included in the wastewater.

The water purification method will be specifically described hereinafter.

The wastewater is subjected to an insolubilization process where an inorganic flocculant is added to inorganic ions (e.g., nickel ions, fluorine ions, iron ions, copper ions, zinc ions, chromium ions, arsenic ions, cadmium ions, tin ions, and lead ions) of inorganic contaminants in wastewater to form microflocs. To the resulting wastewater, the above-mentioned dispersion liquid prepared as an 0.05% by mass to 0.2% by mass aqueous solution is added to cause the microflocs to be aggregated and sedimented. The sediments from the sedimentation are removed to purify the wastewater.

In the insolubilization process, for example, a base is preferably added to the wastewater to turn the wastewater basic, followed by adding an inorganic flocculant to make the inorganic ions insoluble.

Examples of the inorganic flocculant include ferric chloride, ferric polysulfate, ferrous sulfate, aluminum sulfate, aluminum polychloride (PAC), slaked lime, and the like. The above-listed examples may be used alone or in combination.

### Examples

The present invention will be described below by way of Examples. The present invention should not be construed as being limited to these Examples.

### (Example 1: Organic Coagulant 1)

### <Production of organic coagulant 1>

As a raw material for extraction, a dried product of leaves of jute mallow, "Zhonghuangse No. 4" with the identification number 2013 according to Institute of Bast Fiber Crops, Chinese Academy of Agricultural Sciences, was used. As an extraction solvent, pure water was used. Extraction was carried out in the following manner.

The raw material for extraction was dried under the sun until a moisture content of the dried product reached 5% by mass or lower, followed by pulverizing the dried product by an atomizer (Hammer mill, available from MASUKO SANGYO CO., LTD.). Regarding the pulverized product, only the pulverized product component having a particle diameter falling within the range of 100 um to 400 um was used as the raw material.

### -Extraction-

The raw material for extraction was added to the pure water so that a concentration of the raw material became 4% by mass. The resulting mixture was stirred, and extraction was performed under the following extraction conditions, followed by performing filtration to thereby obtain a filtrate (solid content: 1.3% by mass) from which a water-insoluble component was removed. The solid content was determined by drying the filtrate in an oven, and calculating an amount of the solids obtained.

### [Extraction conditions]

Temperature: 25°C
Duration: 60 minutes
Pressure: atmospheric pressure (no pressure adjustment)

The filtrate was diluted with pure water to adjust a solid content to 0.1% by mass, to thereby prepare Organic Coagulant 1.

### <Evaluation>

### -Viscosity-

The viscosity of Organic Coagulant 1 was measured at 23°C by a TVC-10 type viscometer (B-type viscometer) available from Toki Sangyo Co., Ltd., using a rotor No. 0.

### -Electrical conductivity-

The electrical conductivity of Organic Coagulant 1 was measured at the liquid temperature of 22°C by F-70, a benchtop electrical conductivity meter (available from HORIBA, Ltd.).

### -Zeta potential-

A potassium fluoride aqueous solution where a concentration of potassium fluoride was adjusted to 500 ppm was collected in a beaker by 600 mL. While sufficiently stirring the potassium fluoride aqueous solution, 3.5 mL of a 35% by mass calcium fluoride aqueous solution was added.

While sufficiently stirring the resulting mixed solution, 5% by mass sulfuric acid was added to adjust the pH to be within the range of 4.5 ± 0.25.

The zeta potential of the liquid mixture having the pH adjusted in the above-described manner (may be referred to as "CaF₂ zeta potential") was measured by Zetasizer Nano ZSP (available from Malvern Panalytical Ltd.).

Moreover, 100 mL of the liquid mixture having the pH adjusted in the above-described manner was collected. While stirring the collected liquid mixture at 500 rpm, Organic Coagulant 1 was added so that a concentration of Organic Coagulant 1 became 1% by mass. After finishing the stirring, the supernatant fluid was sampled, followed by measuring zeta potential of the supernatant fluid (may be referred as "zeta potential after adding the organic coagulant" hereinafter) in the same manner as above.

A difference between the zeta potential (A) of CaF₂ and the zeta potential (B) after adding the organic coagulant was calculated as Δ zeta potential to evaluate coagulation power owing to neutralization of the charge.

### -Water purification process-

As wastewater to be processed, 600 mL of fluorine raw water (fluorine concentration: 500 mg/L) was used.

Next, 3.5 mL of 35% by mass CaCl₂ and 100 mg/L of Organic Coagulant 1 were added to the wastewater. The resulting mixture was stirred while adding 5% by mass NaOH (adjusting to pH 7.5). As a result of the process described above, the wastewater was separated into a supernatant fluid including microflocs and sediments.

Next, 2 mg/L of an anionic polymeric flocculant (Kurifloc PA-331 (available from Kurita Water Industries Ltd.)) was added to the wastewater composed of the supernatant fluid including microflocs and the sediments, and the resulting mixture was continued to be stirred for one minute, followed by measuring a "fluorine (F) concentration" in the following manner.

### --Measurement of fluorine concentration--

Two minutes after the termination of the stirring, the supernatant fluid was sampled, and a fluorine concentration of the sample was measured by a digital pack test (available from KYORITSU CHEMICAL-CHECK Lab., Corp.), which was a digital water analyzer according to lanthanum-alizarin complexone absorptiometry.

### (Example 2: Organic Coagulant 2)

### <Production of Organic Coagulant 2>

A filtrate (solid content: 1.6% by mass) was obtained in the same manner as in Example 1, except that [Extraction conditions] in <Production of Organic Coagulant 1> of Example 1 were changed as follows.

### [Extraction conditions]

Temperature: 70°C
Duration: 60 minutes
Pressure: atmospheric pressure (no pressure adjustment)

Subsequently, the filtrate was diluted with pure water to adjust a solid content to 0.1% by mass, to thereby prepare Organic Coagulant 2.

### <Evaluation>

The viscosity, electrical conductivity, zeta potential, and water purification process were evaluated in the same manner as in <Evaluation> of Example 1.

### (Example 3: Organic Coagulant 3)

### <Production of Organic Coagulant 3>

A filtrate (solid content: 3.5% by mass) was obtained in the same manner as in Example 1, except that [Extraction conditions] in <Production of Organic Coagulant 1> of Example 1 were changed as follows.

### [Extraction conditions]

Temperature: 100°C
Duration: 60 minutes
Pressure: atmospheric pressure (no pressure adjustment)

Subsequently, the filtrate was diluted with pure water to adjust a solid content to 0.1% by mass, to thereby prepare Organic Coagulant 3.

### <Evaluation>

The viscosity, electrical conductivity, zeta potential, and water purification process were evaluated in the same manner as in <Evaluation> of Example 1.

### (Example 4: Organic Coagulant 4)

### <Production of Organic Coagulant 4>

A filtrate (solid content: 4.5% by mass) was obtained in the same manner as in Example 1, except that [Extraction conditions] in <Production of Organic Coagulant 1> of Example 1 were changed as follows.

### [Extraction conditions]

Temperature: 130°C
Duration: 60 minutes
Pressure: 2 atm

Subsequently, the filtrate was diluted with pure water to adjust a solid content to 0.1% by mass, to thereby prepare Organic Coagulant 4.

### <Evaluation>

The viscosity, electrical conductivity, zeta potential, and water purification process were evaluated in the same manner as in <Evaluation> of Example 1.

### (Example 5: Organic Coagulant 5)

### <Production of Organic Coagulant 5>

A filtrate (solid content: 0.06% by mass) was obtained in the same manner as in Example 1, except that the raw material for extraction and [Extraction conditions] in <Production of Organic Coagulant 1> of Example 1 were changed as follows.

### [Raw material for extraction]

A dried product of the entire part (stems, skins, and leaves) of jute mallow, which was "Zhonghuangse No. 4" with the identification number of 2013 according to Institute of Bast Fiber Crops, Chinese Academy of Agricultural Sciences. The raw material for extraction was dried under the sun until a moisture content of the dried product reached 5% by mass or lower, followed by pulverizing the dried product by an atomizer (Hammer mill, available from MASUKO SANGYO CO., LTD.). Regarding the pulverized product, only the pulverized product component having a particle diameter falling within the range of 100 um to 400 um was used.

### [Extraction conditions]

Temperature: 25°C
Duration: 60 minutes
Pressure: atmospheric pressure (no pressure adjustment)

Subsequently, the filtrate was vacuum concentrated to adjust a solid content to 0.1% by mass, to thereby prepare Organic Coagulant 5.

### <Evaluation>

The viscosity, electrical conductivity, zeta potential, and water purification process were evaluated in the same manner as in <Evaluation> of Example 1.

### (Example 6: Organic Coagulant 6)

### <Production of Organic Coagulant 6>

As a raw material for extraction, a dried product of leaves of jute mallow, "Zhonghuangse No. 4" with the identification number 2013 according to Institute of Bast Fiber Crops, Chinese Academy of Agricultural Sciences, was used, and extraction was carried out in the following manner.

The raw material for extraction was dried under the sun until a moisture content of the dried product reached 5% by mass or lower, followed by pulverizing the dried product by an atomizer (Hammer mill, available from MASUKO SANGYO CO., LTD.). Regarding the pulverized product, only the pulverized product component having a particle diameter falling within the range of 100 um to 400 um was used.

### -Extraction-

Ethyl acetate was added to the raw material for extraction to prepare a 10% by mass solution. The prepared solution was left to stand for 8 hours at room temperature (23°C), followed by performing filtration. The residues from the filtration were washed with ethyl acetate. Thereafter, the residues were provided for extraction with pure water (temperature: 25°C, duration: 60 minutes, pressure: atmospheric pressure (no pressure adjustment)) to obtain a supernatant fluid. A molecular weight cutoff of 12,000 or greater was separated from the obtained supernatant fluid by dialysis.

The separated solution was vacuum concentrated to adjust a solid content to 0.1% by mass, to thereby obtain Organic Coagulant 6.

### <Evaluation>

The viscosity, electrical conductivity, zeta potential, and water purification process were evaluated in the same manner as in <Evaluation> of Example 1.

### (Example 7: Organic Coagulant 7)

### <Production of Organic Coagulant 7>

The molecular weight cutoff of less than 12,000 obtained by the dialysis in <Production of Organic Coagulant 6> of Example 6 was further subjected to dialysis to obtain a molecular weight cutoff of less than 6,000, and the molecular weight cutoff of less than 6,000 was further subjected to dialysis to separate a molecular weight cutoff of less than 3,000.

The separated solution was vacuum concentrated to adjust a solid content to 0.1% by mass, to thereby obtain Organic Coagulant 7.

### <Evaluation>

The viscosity, electrical conductivity, zeta potential, and water purification process were evaluated in the same manner as in <Evaluation> of Example 1.

### (Comparative Example 1: inorganic flocculant)

### <Evaluation>

### -Water purification process-

A water purification process was performed in the same manner as in Example 1, except that, in -Water purification process- of Example 1, the addition of 100 mg/L of Organic Coagulant 1 was changed to addition of 32 mg/L of 8% by mass Al₂(SO₄)₃·16H₂O.

### (Comparative Example 2: no organic coagulant nor inorganic flocculant)

### <Evaluation>

### -Water purification process-

A water purification process was performed in the same manner as in Example 1, except that, in -Water purification process- of Example 1, Organic Coagulant 1 was not used.

### (Comparative Example 3: Comparative Coagulant 1)

### <Production of Comparative Coagulant 1>

As a raw material for extraction, a dried product of husks of rice grains were used. As an extraction solvent, pure water was used. Extraction was carried out in the following manner.

The raw material for extraction was dried under the sun until a moisture content of the dried product reached 5% by mass or lower, followed by pulverizing the dried product by an atomizer (Hammer mill, available from MASUKO SANGYO CO., LTD.). Regarding the pulverized product, only the pulverized product component having a particle diameter falling within the range of 100 um to 400 um was used.

### -Extraction-

The raw material for extraction was added to the pure water so that a concentration of the raw material became 4% by mass. The resulting mixture was stirred, and extraction was performed under the following extraction conditions, followed by performing filtration to thereby obtain a filtrate (solid content: 0.005% by mass) from which a water-insoluble component was removed.

### [Extraction conditions]

Temperature: 95°C
Duration: 60 minutes
Pressure: atmospheric pressure (no pressure adjustment)

Subsequently, the filtrate was vacuum concentrated to adjust a solid content to 0.1% by mass, to thereby prepare Comparative Coagulant 1.

### <Evaluation>

The viscosity, electrical conductivity, zeta potential, and water purification process were evaluated in the same manner as in <Evaluation> of Example 1.

### (Comparative Example 4: Comparative Coagulant 2)

### <Production of Comparative Coagulant 2>

A filtrate (solid content: 0.015% by mass) was obtained in the same manner as in Comparative Example 3, except that [Extraction conditions] in <Production of Comparative Coagulant 1> of Comparative Example 3 were changed as follows.

### [Extraction conditions]

Temperature: 130°C
Duration: 60 minutes
Pressure: 2 atm

Subsequently, the filtrate was vacuum concentrated to adjust a solid content to 0.1% by mass, to thereby prepare Comparative Coagulant 2.

### <Evaluation>

The viscosity, electrical conductivity, zeta potential, and water purification process were evaluated in the same manner as in <Evaluation> of Example 1.

The results of Examples 1 to 7 and Comparative Examples 1 to 4 are presented in Tables 1 and 2.

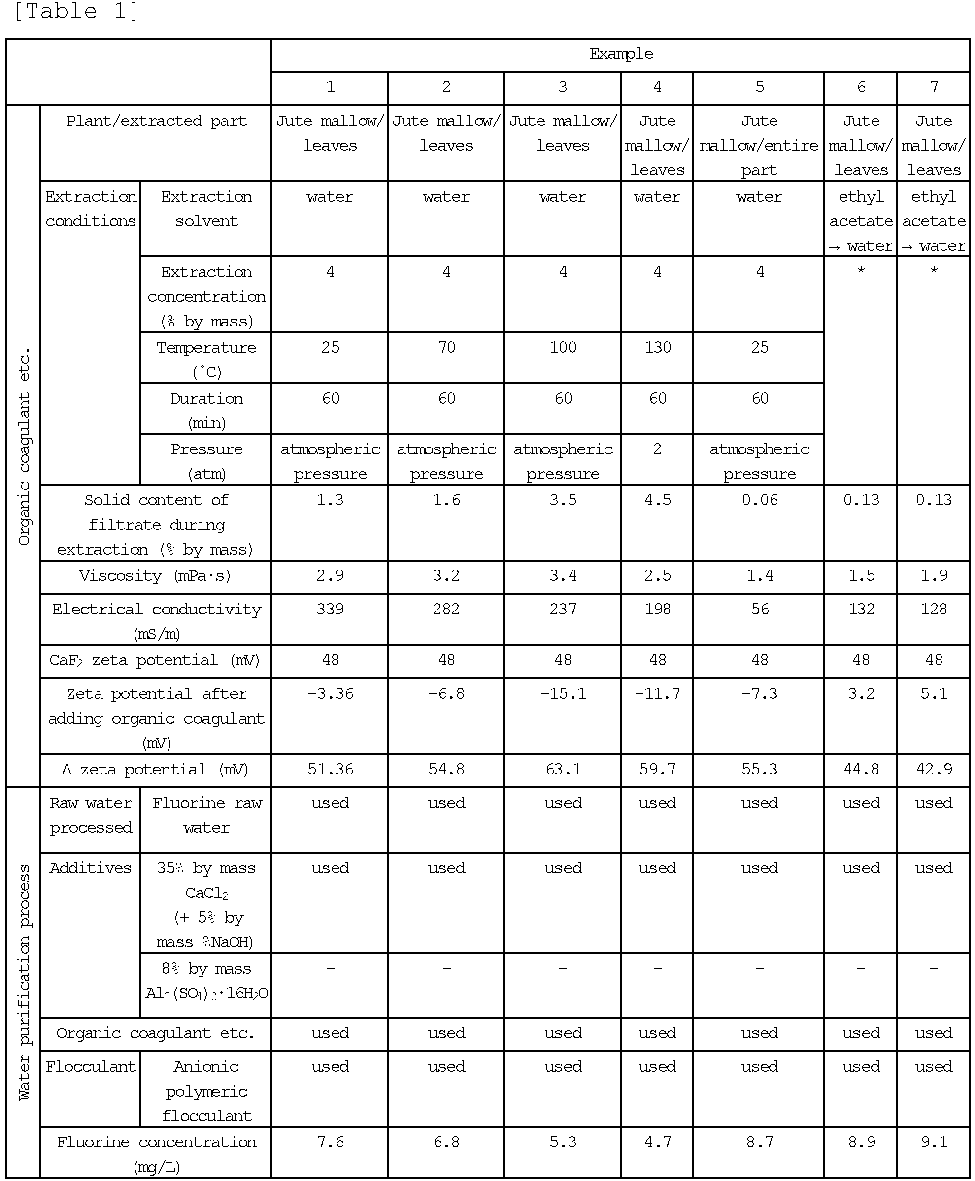

For "*" in Table 1, see the paragraph [0084].

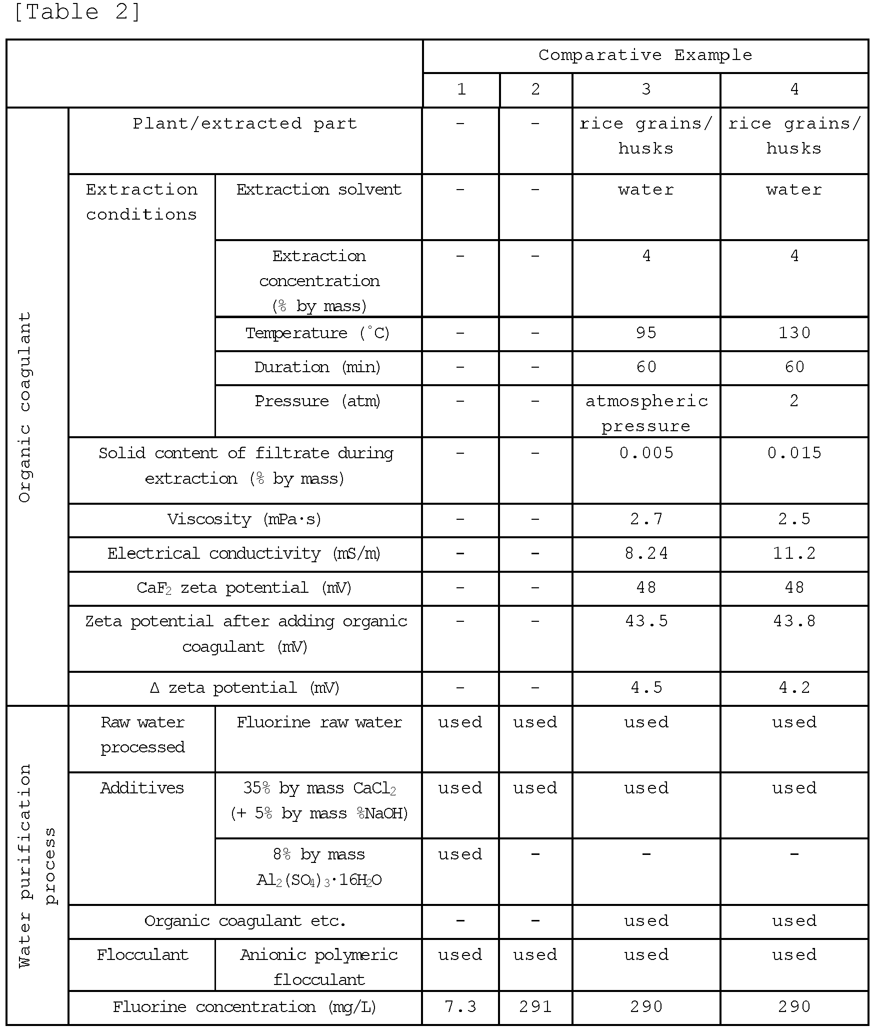

As presented in Tables 1 and 2, it was confirmed that the fluorine concentration in the supernatant fluid after the water purification processing was reduced when the organic coagulant of the present invention was used.

### (Test Example 1: Water-Purifying Agent 1)

### <Production of Water-Purifying Agent 1>

Water-Purifying Agent 1 in the form of granules was produced using Organic Coagulant 5 of Example 5 in the following manner.

A mixture (polymeric flocculant + organic coagulant = 30 kg) obtained by adding 5% by mass of Organic Coagulant 5 to a polymeric flocculant (AN926VHM, available from SNF CO., LTD.) was placed in a planetary mixer (a mixer ACM-110, available from AICOHSHA MFG. CO., LTD., volume: 110 L) and was kneaded by applying shear force under the mixing conditions where the rotational speed was 150 rpm and the duration was 20 minutes.

The obtained kneaded product was stretched by rolling using a press (45-ton press, available from Komatsu Industries Corp.) to produce a sheet-formed product having a thickness of approximately 10 mm.

The formed product was dried for 3 hours at 120°C, followed by drying for 2 hours at 150°C by a multi-layer hot air drier (a rack oven, available from Shichiyo Co., Ltd.).

Next, the dried sheet was pulverized by a pneumatic ultrafine pulverizer (Ceren Miller available from MASUKO SANGYO CO., LTD.) so that a median diameter of the pulverized product became 400 um. The median diameter was measured by Multisizer 2000 (available from Malvern Instruments).

The pulverized powder was classified by a classifier (a vibrating sieve, available from DALTON CORPORATION) by removing the powder having the particle size smaller than 200 um and greater than 900 µm to sample only the powder having the particle size in the range of 200 µm to 900 µm.

The granulated product was obtained as described above, to thereby prepare Water-Purifying Agent 1. An amount of a water-insoluble component in Water-Purifying Agent 1 was 5% by mass or less.

### <Evaluation>

### -Turbidity-

As a wastewater test sample, 500 mL of a solution in which kaolinite was dispersed (kaolinite concentration: 50 ppm) was used.

Next, 0.07 mL of 10% by mass aluminum polychloride (PAC) was added to the wastewater, and 0.21 mL of 5% by mass sodium hydroxide was added to adjust pH to be within the range of 7 to 8.

Thereafter, 1.5 mL of a 0.1% by mass Water-Purifying Agent 1 aqueous solution was added. Within 10 seconds after the addition of the Water-Purifying Agent 1 aqueous solution, turbidity of the resulting supernatant fluid was measured. The measurement was performed by DR 3900, a spectrophotometer available from HACH according to JIS K 0101:1998 (Testing method for industrial water, 9.2 Transmitted-light turbidity).

### (Test Example 2: Water-Purifying Agent 2)

### <Production of Water-Purifying Agent 2>

Water-Purifying Agent 2 was produced in the same manner as in Test Example 1, except that the mixture of the polymeric flocculant and Organic Coagulant 5 in Test Example 1 was replaced with a mixture obtained by adding water a mass of which was 3 times the total mass of the solid content of the raw material for extraction (plant powder) used for the production of Organic Coagulant 5 and the solid content of the polymeric flocculant (AN926VHM (available from SNF CO., LTD.)) (plant powder + polymeric flocculant + water = 30 kg). The amount of the water-insoluble component in Water-Purifying Agent 2 was 20% by mass.

### <Evaluation>

Turbidity was measured in the same manner as in Test Example 1.

### (Test Example 3: Water-Purifying Agent 3)

### <Production of Water-Purifying Agent 3>

Water-Purifying Agent 3 was produced in the same manner as in Test Example 2, except that the plant powder of Test Example 2 was not used. Water-Purifying Agent 3 was free from a water-insoluble component.

### <Evaluation>

Turbidity was measured in the same manner as in Test Example 1.

### (Test Example 4: Water-Purifying Agent 4)

### <Production of Water-Purifying Agent 4>

Water-Purifying Agent 4 was produced in the same manner as in Test Example 1, except that Organic Coagulant 5 used in Test Example 1 was replaced with Organic Coagulant 6 of Example 6. The amount of the water-insoluble component in Water-Purifying Agent 4 was 5% by mass or less.

### <Evaluation>

Turbidity was measured in the same manner as in Test Example 1.

### (Test Example 5: Water-Purifying Agent 5)

### <Production of Water-Purifying Agent 5>

Water-Purifying Agent 5 was produced in the same manner as in Test Example 1, except that Organic Coagulant 5 used in Test Example 1 was replaced with Organic Coagulant 7 of Example 7. The amount of the water-insoluble component in Water-Purifying Agent 5 was 5% by mass or less.

### <Evaluation>

Turbidity was measured in the same manner as in Test Example 1.

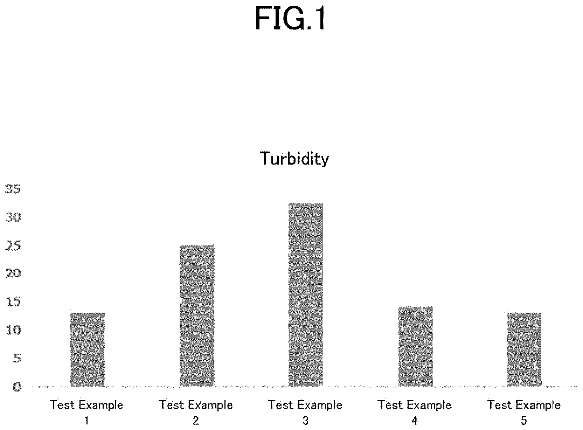

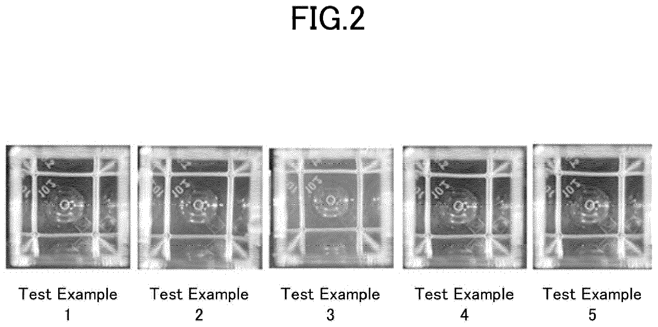

The results of Test Example 1 to 5 above are depicted in Figs. 1 and 2. Fig. 1 is a graph depicting the measurement results of turbidity, and Fig. 2 depicts photographs capturing the state when the turbidity was measured.

As depicted in Figs. 1 and 2, it was confirmed that Water-Purifying Agents 1, 4, and 5, which were each the water-purifying agent of the present invention, had sufficiently low turbidity and demonstrated excellent water purification performance.

## Claims

1. An organic coagulant comprising:
plant extract.

2. The organic coagulant according to claim 1,
wherein electrical conductivity of the organic coagulant with a solid content of the organic coagulant being 0.1% by mass is from 12 mS/m to 350 mS/m.

3. The organic coagulant according to claim 1 or 2,
wherein zeta potential of the organic coagulant is anionic.

4. The organic coagulant according to any one of claims 1 to 3,
wherein the plant extract includes water-soluble natural lignocellulose.

5. The organic coagulant according to any one of claims 1 to 4,
wherein a plant from which the plant extract is extracted is at least one selected from the group consisting of straws, reeds, and hemp.

6. A method of producing an organic coagulant, the method comprising:
a pulverization step including pulverizing of a plant;
an extraction step including mixing of the pulverized plant and water to yield plant extract; and
a filtration step including filtering of the plant extract to yield a liquid component,
wherein the organic coagulant is the organic coagulant according to any one of claims 1 to 5.

7. The method according to claim 6,
wherein the extraction step is carried out at ambient temperature, with heat, or with heat and pressure.

8. A water-purifying agent comprising:
the organic coagulant according to any one of claims 1 to 5; and
a polymeric flocculant.

9. The water-purifying agent according to claim 8,
wherein the water-purifying agent is in a form of particles.

10. The water-purifying agent according to claim 8 or 9,
wherein a mass ratio (organic coagulant/polymeric flocculant) of the organic coagulant to the polymeric flocculant is from 0.01/99.99 to 99.99/0.01.

11. The water-purifying agent according to any one of claims 8 to 10,
wherein an amount of a water-insoluble component in the water-purifying agent is 5% by mass or less.

12. A method of producing a water-purifying agent, the method comprising:
a kneading step including kneading of a polymeric flocculant and the organic coagulant according to any one of claims 1 to 5 to obtain a kneaded product;
a drying step including drying of the kneaded product to obtain a dried product;
a pulverization step including pulverizing of the dried product to obtain a pulverized product; and
a classification step including classifying of the pulverized product to obtain a water-purifying agent,
wherein the water-purifying agent includes the organic coagulant according to any one of claims 1 to 5 and the polymeric flocculant.
